## Europäisches Patentamt

## European Patent Office

## Office européen des brevets

(19)

(11) Veröffentlichungsnummer : **0 385 372 B1**

(12)
# EUROPÄISCHE PATENTSCHRIFT

(45) Veröffentlichungstag der Patentschrift :
**14.10.92 Patentblatt 92/42**

(51) Int. Cl.$^5$ : **F26B 25/00, F26B 23/00**

(21) Anmeldenummer : **90103747.3**

(22) Anmeldetag : **26.02.90**

(54) **Verfahren und Vorrichtung zum Trocknen von zerkleinertem Holz.**

(30) Priorität : **27.02.89 DE 3906064**

(43) Veröffentlichungstag der Anmeldung :
**05.09.90 Patentblatt 90/36**

(45) Bekanntmachung des Hinweises auf die
Patenterteilung :
**14.10.92 Patentblatt 92/42**

(84) Benannte Vertragsstaaten :
**AT BE CH DE DK ES FR GB GR IT LI LU NL SE**

(56) Entgegenhaltungen :
**DE-A- 2 633 165**
**DE-A- 2 800 238**
**DE-A- 3 017 778**
**FR-A- 1 161 753**
**FR-A- 2 394 045**

(56) Entgegenhaltungen :
**FR-A- 2 425 043**
**FR-A- 2 466 439**
**FR-A- 2 544 992**
**GB-A- 655 063**
**GB-A- 655 064**

(73) Patentinhaber : **FRITZ EGGER**
**GESELLSCHAFT m.b.H.**
**A-6380 St. Johann i.T. (AT)**

(72) Erfinder : **Böhler, Harald, Gebhard**
**Wässerfeld 5**
**A-6800 Feldkirch (AT)**
Erfinder : **Reif, Georg**
**St. Veitgasse 9**
**A-1130 Wien (AT)**

(74) Vertreter : **Sandmann, Joachim, Dr.**
**Hirtenstrasse 19**
**W-8012 Ottobrunn (DE)**

EP 0 385 372 B1

**Beschreibung**

Die Erfindung bezieht sich auf ein Verfahren zum Trocknen von zerkleinertem Holz, insbesondere von Holzspänen, Holzfasern oder Furnieren, bei dem das zu trocknende Holz erwärmt und Schadstoffe aus dem Trocknungsabgas ausgewaschen werden, das zumindest bis auf die Taupunkttemperatur des in ihm enthaltenen Wasserdampfs abgekühlt und über einen Kamin ins Freie abgegeben wird.

Ein solches Trocknungsverfahren für Holzspäne oder Holzfasern ist bekannt (DE-A-28 00 238). Dabei wird das Holz direkt im Wege der Mischung mit einem in einer Brennkammer durch Verbrennung von Öl oder Gas erzeugt Heizgas erwärmt. In einem dem Trockner nachfolgenden Zyklonabscheider werden das getrocknete Holz und das Trocknungsabgas, das bei direkter Erwärmung auch das Heizgas enthält, voneinander getrennt. Das Trocknungsabgas durchströmt dann einen Wäscher, durch den als Waschflüssigkeit Wasser zirkuliert, das durch die mit einer Teilkondensation verbunden Abkühlung des Trocknungsabgases im Wäscher anfällt. Ein Teil des gewaschenen Trocknungsabgases wird mit der der zirkulierenden Waschflüssigkeit entzogenen Energie vorgewärmt und über die Brennkammer zum Trockner zurückgeführt.

Trotz der teilweisen Beseitigung von Schadstoffen durch ihre Verbrennung ist die Umweltbelastung infolge der Holztrocknung ein ernsthaftes Problem. Dieses betrifft nicht nur die eigentlichen Schadstoffe, die aus den Holzbeimengungen stammen, sondern auch die als "blauer Rauch" bekannte Dampffahnenbildung beim Austritt der Trocknungsabgase aus dem Kamin. Somit kommt zur Umweltbelastung durch eine mehr oder minder starke Konzentration von Schadstoffen im austretenden Trocknungsabgas auch noch der störende optische Eindruck einer Umweltbelastung.

Bei der Trocknung von Holzspänen, Holzfasern oder dgl. zerkleinertem Holz muß von einer Ausgangsfeuchtigkeit zwischen etwa 50 und 120 % (bezogen auf den Trockengutanteil) zur Weiterverwendung in nachfolgenden Produktionsanlagen auf eine sehr geringe Restfeuchte im Bereich von üblicherweise ca. 1 bis 5 % getrocknet werden. Dabei wird im Interesse einer hohen Durchsatzleistung mit hoher Temperatur getrocknet. So beträgt die Eintrittstemperatur des Heizgases in direkt beheizten Trocknern je nach Trocknertyp und Eintrittsfeuchte des zu trocknenden Gutes zwischen etwa 200°C und 550°C. Bei indirekt beheizten Trocknern liegen die Temperaturen der Kontaktflächen im vergleichbaren Rahmen, teils sogar noch etwas höher. Insbesondere durch die Verdunstung des Wassers aber auch durch die Erwärmung des Gutes ergeben sich Austrittstemperaturen des Trocknungsabgases, die meistens über 100°C liegen und bis zu ca. 170°C - im Einzelfall auch noch höher - betragen können. Aus Gründen der Wirtschaftlichkeit ist man bestrebt, mit möglichst niedrigen Abgastemperaturen bei möglichst hohem Wasserdampfgehalt des Trocknungsabgases zu arbeiten. Die Eintrittsfeuchtigkeit des zu trocknenden Gutes unterliegt häufig großen Schwankungen. Diese entstehen durch jahreszeitlich bedingte Einflüsse, sind aber auch abhängig von der Holzart, dem Schlägerungsgebiet, der Lagerzeit und einer ggf. erfolgten Vortrocknung.

Die umweltbelastende Staubbeladung des Trocknungsabgases ist bei direkt beheizten Trocknern im allgemeinen erheblich höher als bei Trocknern mit indirekter Erwärmung des zu trocknenden Gutes. Der Staub besteht aus verbrannten, also anorganischen Teilchen und aus organischen Partikeln - darunter auch solche, die als karzinogen eingestuft werden. Dies gilt besonders für lungengängigen Feinstaub von Holz und hier wiederum besonders von Buchenholz und Eichenholz.

Neben der Staubbelastung finden sich im Trocknungsabgas in starkem Maße auch Schadstoffe in flüssiger oder gasförmiger Form. Beim Trocknen des zerkleinerten Holzes wird aus diesem nicht nur Wasser verdampft, es werden auch verschiedene Holzinhaltstoffe verdampft und zersetzt. Dabei handelt es sich im wesentlichen um organische Stoffe wie Terpene, Aldehyde, Phenole, Carbonsäure, Alkohole und andere. Bei ihrer Abkühlung kondensieren diese Schadstoffe teilweise zu feinsten Aerosolen, die durch Staubabscheider nicht oder nur zu einem geringen Teil erfaßt werden und zu dem bereits erwähnten "blauen Rauch" führen. Dessen Zusammensetzung und der Entstehungsmechanismus sind trotz zahlreicher Untersuchungen noch weitgehend unbekannt. Zu den hier angesprochenen Schadstoffen gehört auch das wegen seines möglichen Gefährdungspotentials umstrittene Formaldehyd.

Die wünschenswerte Reinigung des Trocknungsabgases von Schadstoffen, namentlich Staubpartikeln, Aerosolen und gasförmig vorliegenden Stoffen, gestaltet sich deshalb besonders schwierig, weil sich diese Stoffe häufig miteinander zu einer klebrigen und damit schwer abzureinigenden Masse verbinden, welche die Reinigungsanlage verklebt und so deren Abscheidevermögen in kurzer Zeit erheblich reduzieren kann oder aber einen großen Aufwand für die laufende Abreinigung verursacht. Deshalb ist es bisher nicht gelungen, das Trocknungsabgas sowohl mit großer Effizienz wie auch in wirtschaftlicher Weise mit vergleichsweise geringem Aufwand zu reinigen.

Im Hinblick auf die Wirtschaftlichkeit ist auch der Energiebedarf für den Trocknungsvorgang zu berücksichtigen. Das Trocknungsabgas enthält zwangsläufig erhebliche Mengen bzw. Anteile von Wasserdampf. In diesem Wasserdampf steckt ein Großteil der für den Trocknungsvorgang aufgebrachten Energie. Diese Energie kann zu einem wesentlichen Teil zurückgewonnen werden und für betriebliche Zwecke, insbesondere für eine Holzvortrocknung, genutzt werden. Allerdings bestehen nicht immer ausreichende Ableitmöglichkeiten für das dabei anfallende Kondensat. Dementsprechend ist ein Verfahren erwünscht, bei welchem der Kondensatanfall auf einfache Weise den jeweiligen Gegebenheiten angepaßt werden kann.

Der Erfindung liegt die Aufgabe zugrunde, das Trocknungsabgas wirksam und mit vergleichsweise geringem Aufwand für die Anlage und ihre Bedienung sowie Instandhaltung zu reinigen und dabei Wärmerückgewinnungsmöglichkeiten zu nutzen und somit Umweltbelastungen abzubauen.

Diese Aufgabe wird erfindungsgemäß dadurch gelöst, daß als Waschflüssigkeit ein Lösemittel verwendet wird, das einen höheren Siedepunkt und einen niedrigeren Dampfdruck als Wasser aufweist.

Das Auswaschen von Schadstoffen mit Hilfe eines Lösemittels - darunter ist auch ein Gemisch verschiedener Lösemittel oder eine Waschflüssigkeit mit einem Zusatz von Lösemittel zu verstehen - bewirkt eine Ausscheidung von nicht wasserlöslichen Schadstoffen und verhindert deren Anlagerung oder Zusammenpackung zu schwer entfernbaren Rückständen. Auf diese Weise können störende Verschmutzungen der Anlage verhindert und lange Betriebszeiten mit einer andauernden effektiven Reinigung gesichert werden. Im Interesse eines geringen Lösemittelbedarfs sind die Betriebsweise, der Verfahrensablauf und die zur Verwendung kommenden Lösemittel entsprechend aufeinander abzustimmen. Dabei wird durch die Wahl eines Lösemittels mit hohem Siedepunkt bzw. niedrigem Dampfdruck verhindert, daß das sich beim Waschvorgang erwärmende Lösemittel in wesentlichem Maße verdampft und mit dem Trocknungsabgas abströmt. Durch die bewußte Abkühlung des Trocknungsabgases kommt es zu einer Sättigung desselben mit Wasserdampf, deren Ausmaß sich durch die Intensität der Abkühlung steuern läßt. Dadurch wird der Verdampfung der Waschflüssigkeit bzw. deren gasförmiger Austragung zusätzlich entgegengewirkt. Der im Trocknungsabgas enthaltene Wasserdampf enthält den Hauptanteil der beim Trocknungsvorgang aufgebrachten Wärmeenergie, die dementsprechend sich je nach der gefahrenen Betriebsweise teilweise bis weitgehend zurückgewinnen läßt.

Die Kondensation von Wasserdampf aus dem Trocknungsabgas und auch bereits die Teilkondensation davon hat des weiteren den Vorteil, daß sie zu einer Ausscheidung von Schadstoffen zusammen mit dem Kondensat oder der Waschflüssigkeit führt und dadurch zu einer Reinigung des Trocknungsabgases wesentlich beiträgt. Damit wird auch der Ausbildung des "blauen Rauchs" wirkungsvoll begegnet.

Durch den Umfang der Wärmerückgewinnung (Abkühlung) läßt sich also der Anfall an Abwasser beeinflussen. Dort, wo die Beseitigung großer Abwassermengen Probleme bereitet, kann mit geringerer Wärmerückgewinnung gearbeitet werden, während bei problemloser Abwasserbeseitigung die Wärmerückgewinnung ganz erheblich sein kann.

Hier ist zu berücksichtigen, daß die nutzbare Kondensationswärme (Verdampfungswärme) bei ca. 2,3 MJ/kg Wasser liegt.

Die Erfindung bezieht sich auch auf eine Vorrichtung zur Durchführung des erfindungsgemäßen Verfahrens, bestehend aus einem Trockner mit einer Einfülleinrichtung für das zu trocknende Holz, einer Einleitung für ein Heizgas und einem Austritt, aus einem nachfolgenden Abscheider zum Trennen des getrockneten Holzes vom Trocknungsabgas und aus einem vom Trocknungsabgas durchströmten Wäscher, dessen die Waschflüssigkeit auffangender Sumpf über eine Umwälzleitung, die durch einen Wärmetauscher zur Kühlung der Waschflüssigkeit führt, mit den Sprühdüsen des Wäschers verbunden ist, wobei ein Ablauf für schadstoffbeladene Waschflüssigkeit vorgesehen und dem Wäscher eine Einrichtung zum Zudosieren von Waschflüssigkeit zugeordnet ist. Eine solche Vorrichtung ist ebenfalls aus der DE-A-28 00 238 bekannt.

Diese Vorrichtung ist erfindungsgemäß dadurch gekennzeichnet, daß der Wärmetauscher zur Kühlung der Waschflüssigkeit in einem Wärmetransportkreislauf zur Beheizung eines Vortrockners für das zu trocknende Holz angeordnet ist oder daß der Wärmetauscher zur Kühlung der Waschflüssigkeit in einem Wärmetransportkreislauf zur Nacherwärmung des zum Kamin strömenden gewaschenen Trocknungsabgases angeordnet ist. Mit den entsprechend ausgebildeten Vorrichtungen wird die aus dem Trocknungsabgas zurückgewonnene Wärme sinnvoll und in besonders umweltfreundlicher Weise genutzt.

Mit dieser Vorrichtung läßt sich das zuvor beschriebene Verfahren durchführen. Dabei wird die beschriebene gute Reinigung in Verbindung mit mehr oder minder großen Einsparungen an Energie erzielt, ohne daß dafür eine aufwendige oder zu Verschmutzungen neigende Vorrichtung erforderlich ist.

Zweckmäßige Ausgestaltungen des erfindungsgemäßen Verfahrens und der beiden Vorrichtungen ergeben sich aus den entsprechenden Unteransprüchen.

Im Hinblick auf die dort aufgeführte Vortrocknung des zerkleinerten Holzes mit rückgewonnener Wärmeenergie ist darauf hinzuweisen, daß die vorbeschriebene Nutzung der Kondensationswärme nicht nur einen erheblichen Energiespareffekt und damit eine Umweltentlastung durch Einsparung von für den Trocknungsvorgang erforderlichen Energieträgern bringt, sondern daß die vorgesehene Nutzung der Kondensationswärme zum Vortrocknen des zerkleinerten Holzes sich auch dadurch positiv auswirkt, daß die Trocknung ohne Rückgang der Durchsatzleistung mit niedrigeren Temperaturen betrieben werden kann. Bei niedrigeren Temperaturen vermindert sich nämlich die Freisetzung und Bildung von luftverunreinigenden Stoffen erheblich. Mit der wirtschaftlich durchführbaren Vortrocknung des Holzes läßt sich somit bereits von vornherein eine Schadstoffreduktion im Trocknungsabgas erreichen, ohne daß dafür besondere Reinigungsmaßnahmen ergriffen werden müssen. Dabei kann die Vortrocknung auch bereits mit niedrigen Temperaturen erfolgen, wozu zweckmäßigerweise die Trocknung unter Vakuum durchgeführt wird, so daß der Siedepunkt des zu verdampfenden Wassers entsprechend niedriger liegt.

Die Holztrocknung unter Vakuum ist allerdings bekannt (DE-OS 35 43 248). Dort wird jedoch Stückholz getrocknet, und zwar chargenweise in einem hermetisch abgeschlossenen und evakuierten Behälter. Da hierbei die verdampfte Feuchtigkeit auch nicht nach außen aus dem System herausgeführt wird wird sie notwendigerweise durch Kühlung niedergeschlagen und in einem Kondenswasserbehälter angesammelt.

Die verwendete Waschflüssigkeit bzw. das Lösemittel sollte einen über der höchsten Gaseintrittstemperatur in den Wäscher liegenden Siedepunkt haben. Zweckmäßigerweise erfolgt die Auswahl der Waschflüssigkeit ferner unter Berücksichtigung des Flammpunktes und der Selbstentzündungstemperatur in der Luft, der Umweltverträglichkeit und dem sonstigen Gefährdungspotential sowie der Kosten. Verschiedene wasserlösliche und wasserunlösliche Lösemittel sowie Lösemittelgemische haben sich als geeignet erwiesen. Die Auswahl ist abhängig von den Betriebsbedingungen der Anlage und den jeweiligen Randbedingungen. Auch sind die Beseitigungsmöglichkeiten anfallender Abwässer in Verbindung mit deren zulässiger Belastung zu berücksichtigen. Als besonders geeignet haben sich verschiedene Glykole und Mineralölprodukte, ja sogar pflanzliche Öle erwiesen. Bei dem erfindungsgemäß vorgesehenen Wäscher, dem bei starker Staubbelastung des Trocknungsabgases eine bekannte Entstaubungseinrichtung wie beispielsweise ein Schwerkraftabscheider, ein nasser oder trockener Elektrofilter oder auch ein Gewebefilter vorgeschaltet sein kann, kann es sich beispielsweise um einen Sprühwäscher, einen Venturiwäscher, einen Rotationswäscher, einen Strahlwäscher oder dgl. handeln. Dabei wird für eine dauernde Benetzung der mit dem Trocknungsabgas in Berührung kommenden Flächen gesorgt. Dieses kann mittels direkt eingedüster Waschflüssigkeit oder durch gezielte Kondensatbildung geschehen. So werden Ablagerungen verhindert und ein guter Selbstreinigungseffekt erzielt, wobei die Waschflüssigkeit die Schadstoffe adsorptiv oder absorbtiv bindet oder auch chemische Verbindungen mit den Schadstoffen eingehen kann. Dementsprechend muß die Waschflüssigkeit nach einer bestimmten Betriebszeit vollständig oder weitgehend ersetzt bzw. erneuert oder kontinuierlich mit entsprechend geringerer Menge laufend abgezogen und ebenfalls frisch nachgeführt werden. Zwar kommt eine Aufbereitung der verbrauchten Waschflüssigkeit in Betracht, es kann jedoch zweckmäßig sein, daß die Waschflüssigkeit zusammen mit den ausgewaschenen Schadstoffen verbrannt und zusammen mit diesen dadurch wirksam beseitigt wird. Die dabei entstehende Verbrennungswärme kann beispielsweise für den Wärmebedarf des Trockners oder eines Vortrockners herangezogen werden.

Es kann zweckmäßig sein, zwei oder mehr Waschstufen einzusetzen, die jeweils mit unterschiedlichen Waschflüssigkeiten und gegebenenfalls auch mit unterschiedlichen Temperaturen betrieben werden.Damit können einzelne Stufen gezielt für die Abscheidung oder Zersetzung bestimmter Schadstoffe herangezogen werden, so beispielsweise für die Abscheidung von Formaldehyd durch Verwendung einer mit Natronlauge alkalisch eingestellten Waschstufe. Vorteilhaft ist es auch, bei einer erheblichen Temperaturabsenkung bzw. Wärmerückgewinnung jene Waschstufe, in der brennbare Lösungsmittelgemische eingesetzt sind, so zu betreiben, daß darin keine bzw. keine nennenswerte Kondensation von Wasserdampf auftritt, um so die verschmutzten Lösemittel ohne wesentlichen Wasseranteil der Verbrennung oder einer sonstigen Behandlung zuführen zu können.

Das gewaschene Trocknungsabgas enthält feinste Tröpfchen aus Wasser und Waschflüssigkeit, kleine Restmengen feinster fester und flüssiger Schadstoffe und noch geringe Spuren gasförmiger Stoffe. Deswegen ist es besonders sinnvoll, einen Aerosolabscheider nachzuschalten, der zur Selbstreinigung ebenfalls zusätzlich bedüst sein kann und zu einer wirkungsvollen Entfernung der noch im Trocknungsabgas enthaltenen flüssigen und festen Partikel führt. Eine nachfolgende Erwärmung des Trocknungsabgases oder eine Warmluftbeimischung zum gereinigten, wasserdampfgesättigten Trocknungsabgas vor dem Ausblasen kann die Ausbildung von Dampffahnen erheblich verringern.

Die Rückgewinnung von Wärme und ihre Nutzung in einem unter Vakuum arbeitenden Vortrockner setzt für einen wirtschaftlich sinnvollen Betrieb eine Temperatur des Heizmediums von wenigstens ca. 45°C voraus. Eine weitergehende Wärmenutzung ist durch die Anwendung einer Wärmepumpe möglich. Allerdings erhöhen sich dabei die Betriebs- und Energiekosten, so daß neben behördlichen Auflagen insbesondere wirtschaftliche Erwägungen zu berücksichtigen sind.

Ausführungsbeispiele der Erfindung werden nachfolgend anhand einer schematischen Zeichnung näher erläutert. Es zeigt:

Fig. 1 in Vollinien eine Reinigungsanlage für ein Trocknungsabgas, die in eine Gesamtanlage zum Trocknen von Spänen integriert ist, von der weitere Teile gestrichelt angedeutet sind;

Fig. 2 eine ähnliche Anlage wie in Fig. 1, wobei ein Vortrockner für die Späne vorgesehen ist, für den die in der Reinigungsanlage zurückgewonnene Wärmeenergie verwendet wird;

Fig. 3 eine Anlage mit zwei in Reihe geschalteten Wäschern und einem Vortrockner und

Fig. 4 eine Fig. 3 weitgehend entsprechende Anlage mit einer der Fig. 2 im wesentlichen entsprechenden Nutzung der zurückgewonnenen Wärme für die Vortrocknung.

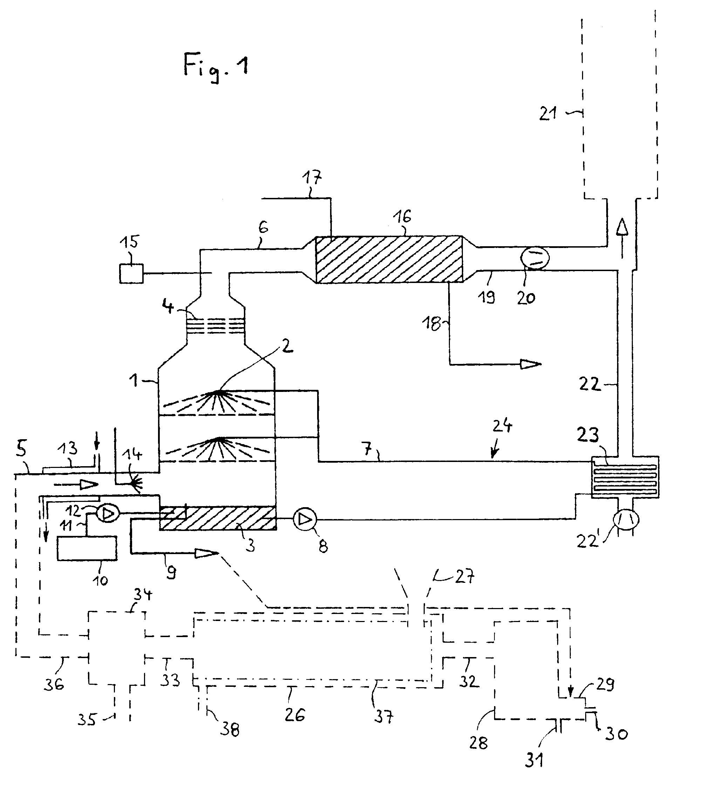

Gemäß Fig. 1 ist ein Wäscher 1 mit Sprühdüsen 2, einem unteren Sumpf 3 und einem oberen Tropfenabscheider 4 vorgesehen, der mit einem Abgaseintritt 5 und einem Abgasaustritt 6 versehen ist. Der Sumpf 3 und die Sprühdüsen 2 sind durch eine Umwälzleitung 7 mit einer Umwälzpumpe 8 miteinander verbunden. Ferner sind dem Sumpf 3 ein Ablauf 9 (Überlauf) und ein Vorratstank 10 für Waschflüssigkeit mit einer Dosierleitung 11 und einer Dosierpumpe 12 zugeordnet. Der Abgaseintritt 5 verläuft durch einen Wärmetauscher 13 zur Kühlung des Trocknungsabgases. Im Abgaseintritt 5 ist eine Düse 14 zum Einsprühen von Wasser in das Trocknungsabgas angeordnet, Die Düse 14 dient der Vorkühlung des Trocknungsabgases, der Abreinigung des Abgaseintritts 5 und zur Sicherheit gegen eine unzulässig hohe Eintrittstemperatur des Trocknungsabgases. Ggf. kann jedoch die Düse 14 ebenso wie der Wärmetauscher 13 nicht betrieben werden.

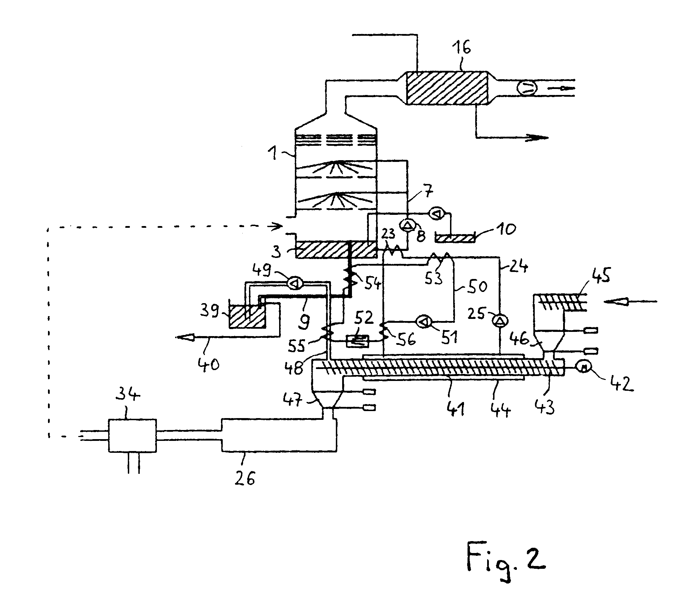

Dem Abgasaustritt 6 ist der Fühler eines Feuchtigkeitsmessers 15 zugeordnet. An den Abgasaustritt 6 schließt sich ein Aerosolabscheider 16 an. An diesen sind eine Wasserzuleitung 17 mit einer Eindüsung und eine Ablaufleitung 18 angeschlossen. Vom Aerosolabscheider 16 strömt das Trocknungsabgas durch eine Abgabeleitung 19 mit einem Ventilator 20 zu einem angedeuteten Kamin 21. In die Abgabeleitung 19 mündet eine Warmluftleitung 22 mit einem Ventilator 22' zum Ansaugen von Außenluft und mit einem in die Umwälzleitung 7 eingebauten Wärmetauscher 23, der somit in einem Wärmetransportkreislauf 24 angeordnet ist. Im Wärmetauscher 23 wird die dem gereinigten Trocknungsabgas beigemischte Außenluft erwärmt und die durch die Umwälzleitung 7 strömende Waschflüssigkeit gekühlt. Somit wird aus dem Trocknungsabgas gewonnene Wärme mittels des Wärmetransportkreislaufs 24 einer Nutzung zugeführt. Eine weitere Nutzungsmöglichkeit für diese zurückgewonnene Wärme wird nachfolgend im Zusammenhang mit Fig. 2 beschrieben. Der Wärmetransportkreislauf 24 kann dabei so betrieben werden, daß eine gewünschte bestimmte Abkühlung der durch die Umwälzleitung 7 strömenden Waschflüssigkeit erreicht wird, bei der es sich um ein Lösemittel bzw. ein Lösemittelgemisch handelt, dem noch sonstige Chemikalien beigefügt sein können und das ggf. auch durch Wasserbeigabe verdünnt sein kann.

Der Wäscher 1 kann so betrieben werden, daß das austretende Trocknungsabgas die Taupunkttemperatur von Wasserdampf des eintretenden Trocknungsabgases einhält oder nur knapp darunter liegt. Dann ergibt sich ein nur geringer Kondensatanfall. Die Möglichkeiten zu einer Rückgewinnung von im Trocknungsabgas enthaltener Kondensationswärme sind dann nicht oder nur in geringfügigem Maße vorhanden.

Der Wäscher 1 kann auch mit einer erheblichen Temperaturabsenkung des Trocknungsabgases bis unter die Taupunkttemperatur für Wasserdampf des eintretenden Trocknungsabgases betrieben werden, wenn im Wärmetauscher 23 eine entsprechend starke Abkühlung erfolgt. Dann ergibt sich ein entsprechend großer Kondensatanfall mit einer gegenüber der vorstehend beschriebenen abwasserarmen Betriebsweise erheblich gesteigerten Wärmerückgewinnung.

Wird das eintretende Trocknungsabgas durch ausreichendes Einspritzen von Wasser oder von einem geeigneten Gemisch aus Wasser und Lösemittel mittels der Düse 14 abgekühlt, so bewirkt die Verdampfung des eingespritzten Wassers eine Temperaturabsenkung des Trocknungsabgases bis zur Sättigungstemperatur. Bei Verwendung eines geeigneten Gemisches aus Wasser und Lösemittel als Waschflüssigkeit läßt sich erreichen, daß diese Flüssigkeit weitgehend im Kreislauf umgewälzt werden kann, wobei der Wasseranteil, welcher bevorzugt verdampft, laufend ergänzt werden muß. Durch eine weitergehende Abkühlung des Trocknungsabgases im Wäscher 1 kann der Kondensatanfall so eingestellt werden, daß sich keine zusätzliche Anreicherung des Trocknungsabgases mit Wasserdampf ergibt und das System annähernd abwasserlos arbeitet. Es ist dann die Waschflüssigkeit aus dem Wäscher 1 über die Düse 14 wieder einzudüsen. Bei einer weitergehenden Temperaturabsenkung, welche zweckmäßig mit einer Wärmerückgewinnung verbunden wird, würde ein Kondensatüberschuß anfallen, welcher abgeleitet werden muß.

Würde man den Wäscher 1 ohne Wärmeentzug und ohne Kühlung des Trocknungsabgases betreiben, so stellt sich die Temperatur der Waschflüssigkeit annähernd auf jene des einströmenden Trocknungsabgases ein. Es tritt dann in dieser Waschstufe keine Kondensation auf und es werden, da das austretende Trocknungsabgas nicht mit Wasserdampf gesättigt ist, vermehrt Teile der Waschflüssigkeit verdunsten bzw. verdampfen und mit dem Trocknungsabgas ausgetragen. Eine solche Betriebsweise wird in der Regel unerwünscht und wegen möglicher Emissionsbelastungen auch unzulässig sein.

In Fig. 1 ist mit unterbrochenen Linien ein kontinuierlich betreibbarer Trockner 26 mit einer Einfülleinrichtung 27 für das zu trocknende Holz angedeutet. Ein Ofen 28 mit einem Brenner 29 mit Brennstoffzuleitung 30 und Luftzuführung 31 ist über eine Heizgasleitung 32 mit dem Trockner 26 verbunden. Bei direkter Trocknung kommen die Heizgase direkt mit dem eingefüllten zerkleinerten Holz in Berührung und werden zusammen mit diesem über eine Verbindungsleitung 33 einem Abscheider 34 zugeführt. Dort wird das getrocknete Gut einem Auslauf 35 zugeführt, während die Trocknungsabgase, welche auch die Verbrennungsgase des Ofens 28 enthalten, einem Gasaustritt 36 zugeführt werden, der wie dargestellt mit dem Abgaseintritt 5 in Verbindung steht.

In Fig. 1 ist strichpunktiert angedeutet, daß der Trockner 26 auch als indirekter Trockner mit Wärmetauscherflächen 37 und einem gesonderten Heizgasaustritt 38 versehen sein kann, so daß das Heizgas und das zu trocknende Gut nicht miteinander in Berührung kommen und das dem Abgaseintritt 5 zuströmende Trocknungsabgas vom Heizgas bzw. den Verbrennungsabgasen frei bleibt. Die durch den Heizgasaustritt 38 abströmende Verbrennungsabgase müssen dann ggf. in bekannter Weise gesondert nachbehandelt bzw. gereinigt werden.

In Fig. 1 ist ferner angedeutet, daß die über den Ablauf 9 entnommene mit Schadstoffen beladene Waschflüssigkeit dem Ofen 28 zugeführt werden kann, um dort verbrannt zu werden, wodurch die mitgeführten Schadstoffe wirksam beseitigt werden. Natürlich könnte die verbrauchte Waschflüssigkeit auch aufbereitet und dann dem Vorratstank 10 zugeführt werden.

Die in Fig. 2 dargestellte Anlage stimmt weitgehend mit derjenigen überein, die bereits anhand von Fig. 1 ausführlich erläutert wurde. Die entsprechenden Teile sind daher mit gleichen Bezugsziffern versehen und werden nicht nochmals erläutert. Beschrieben werden vielmehr nur die Abweichungen gegenüber Fig. 1.

Der vom Sumpf 3 des turmförmigen Wäschers 1 ausgehende Ablauf 9 führt zu einem Zwischentank 39, an den eine Abzugsleitung 40 angeschlossen ist.

Zusätzlich ist ein Vortrockner 41 mit einer von einem Motor 42 angetriebenen Förderschnecke 43 und mit einem Heizmantel 44 vorgesehen. Der Vortrockner 41 wird mittels einer Zuführschnecke 45 über eine Einfüllschleuse 46 beschickt. Das in Förderrichtung hintere Ende des Vortrockners 41 ist über eine Austragschleuse 47 mit dem Trockner 26 verbunden. An das hintere Vortrocknerende ist ferner eine Dampfabsaugleitung 48 angeschlossen, die eine Vakuumpumpe 49 aufweist und in den Zwischentank 39 mündet.

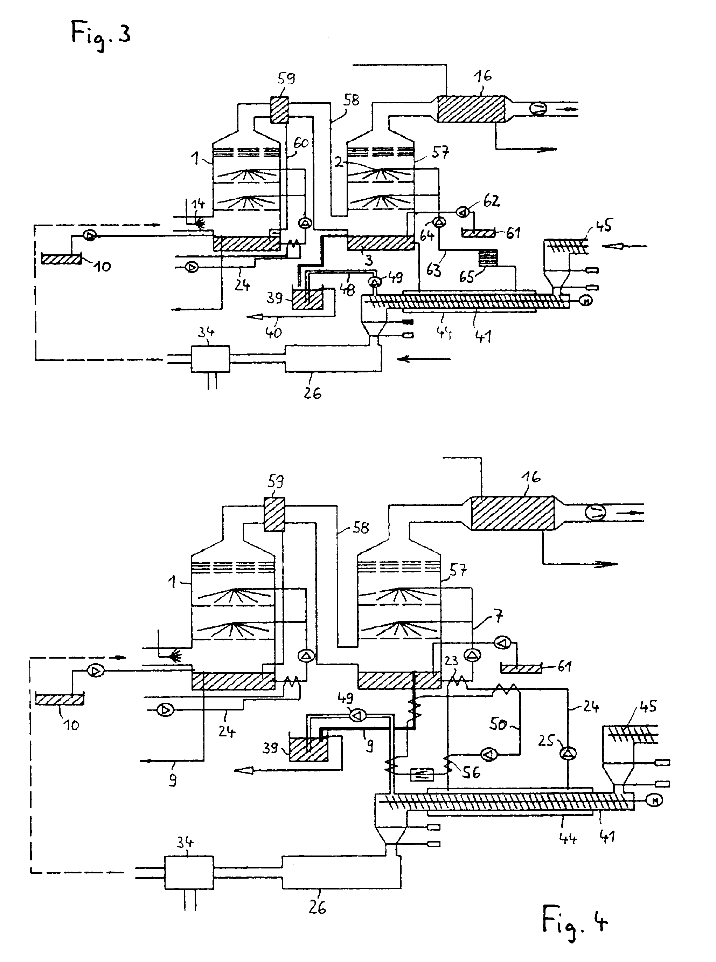

Der Wärmetransportkreislauf 24, der hier von der Umwälzleitung 7 verschieden und mit dieser durch den Wärmetauscher 23 verbunden ist, führt in diesem Falle durch den Heizpfad oder Heizmantel 44 des Vortrockners 41, der auf diese Weise beheizt wird. Zur verbesserten Rückgewinnung und Nutzung von Wärme sowie zur Erhöhung der Leistung des Vortrockners 41 ist ferner ein Wärmepumpenkreislauf 50 mit einem Kompressor 31 und einem Entspannungsventil 52 vorgesehen, der über Wärmetauscher 53, 54 und 55, die dem Wärmetransportkreislauf 24 vor dem Wärmetauscher 23, dem Ablauf 9 bzw. der Dampfabsaugleitung 48 zugeordnet sind, Wärme aufnimmt. Diese Wärme wird in einem Wärmetauscher 56, der zwischen dem Kompressor 51 und dem Entspannungsventil 52 in den Wärmepumpenkreislauf 50 eingebaut ist, an den Wärmetransportkreislauf 24 wieder abgegeben und zwar an einer Stelle hinter dem Wärmetauscher 23 und vor dem Eintritt in den Heizmantel 44 des Vortrockners 41. Er hebt so die Temperatur im Wärmetransportkreislauf 24 vor Eintritt in den Heizmantel 44 an. Auch kann auf den Wärmetauscher 23 und die Umwälzpumpe 8 verzichtet werden, wenn die aus dem Sumpf 3 abgesaugte Waschflüssigkeit direkt über den Wärmetauscher 56 dem Heizmantel 44 des Vortrockners 41 zugeführt und in der Folge über die Umwälzpumpe 25 des Wärmetransportkreislaufs 24 wieder in den Wäscher 1 eingedüst wird. Dies ist beispielhaft in Fig. 3 so dargestellt.

Durch die mit dem Wärmepumpenkreislauf 50 bewirkte Temperaturverschiebung ergibt sich die Möglichkeit, auch noch solche Wärmemengen für die Vortrocknung zu nutzen, die nur mit vergleichsweise niedriger Temperatur verfügbar sind. Dabei wird die mittels des Wärmetauschers 55 erfolgende Abkühlung der Dampfabsaugleitung 48 bzw. des durchströmenden Dampfes zweckmäßigerweise so stark betrieben, daß der Dampf bereits weitgehend kondensiert. Dadurch wird die Vakuumpumpe 49 entlastet, so daß sie wirtschaftlicher ausgelegt und betrieben werden kann. Durch den Wärmetauscher 54 wird im Überschußwasser des Wäschers 1 enthaltene Wärme teilweise zurückgewonnen.

Die Anlage gemäß Fig. 3 kann weitgehend als Kombination der beiden Vorrichtungen aus Figuren 1 und 2 jedoch mit zwei getrennten Waschstufen bezeichnet werden. Dementsprechend ist dem Wäscher 1 ein weiterer oder zweiter Wäscher 57 von im wesentlichen gleicher Ausbildung nachgeschaltet. Dazu sind die beiden Wäscher 1 und 57 durch eine Überströmleitung 58 mit einem gesonderten Tropfenabscheider 59 miteinander verbunden, der über eine Rücklaufleitung 60 mit dem Sumpf 3 des Wäschers 1 verbunden ist.

Dem Wäscher 57 ist ein eigener Vorratstank 61 mit einer Dosierpumpe 62 zugeordnet, so daß er mit einer im Vergleich zum Wäscher 1 eigenen bzw. unterschiedlichen Waschflüssigkeit betrieben werden kann. Auch die ablaufenden verbrauchten Waschflüssigkeiten werden wie angedeutet getrennt weiterbehandelt.

In Figur 3 ist beim Wäscher 57 kein gesonderter Wärmetransportkreislauf vorgesehen, vielmehr wird die Waschflüssigkeit direkt durch eine Kreislaufleitung 63 mit einer Umwälzpumpe 64 vom Sumpf 3 des Wäschers 57 durch den Heizmantel 44 des Vortrockners 41 und durch einen Kühlturm 65 den Sprühdüsen 2 zugeführt. Dabei fehlt auch der gemäß Fig.2 vorgesehene Wärmepumpenkreislauf 50, was zu Vereinfachungen der Vorrichtung führt. Die Beheizung des Trockners 26 ist in Fig. 3 mit einem Pfeil für das zugeführte Heizgas angedeutet.

Eine Anlage mit zwei getrennten Waschtürmen bzw. Wäschern 1 und 57 bietet Vorteile, wie sich aus der nachfolgend beschriebenen vorgesehenen Betriebsweise ergibt:

Die erste Waschstufe bzw. der Wäscher 1 kann mit einem Lösemittel gefahren werden, das gute Löslichkeit für die besonders zur Verklebung neigenden Partikel und Aerosole in der Trocknungsabluft aufweist. Damit werden diese weitgehend ausgewaschen. In der zweiten Waschstufe bzw. im Wäscher 57 kann die überströmende teilgereinigte Trocknungsabluft mit einer wässrigen Lösung von Natronlauge gewaschen werden, der Wasserstoffperoxyd zugesetzt ist. Dabei werden nun die wasserlöslichen Schadstoffe ausgewaschen. Ferner wird das aus dem Trocknungsvorgang stammende Formaldehyd aus dem Trocknungsabgas aufgenommen und zu Ameisensäure abgebaut, die wiederum durch die Natronlauge neutralisiert wird.

Durch Wärmeentzug aus der Waschflüssigkeit wird der im Trocknungsabgas enthaltene Wasserdampf kondensiert und die dabei anfallende Kondensationswärme für die Vortrocknung genutzt. Der in die von der Waschflüssigkeit durchströmte Kreislaufleitung 63 eingebaute Kühlturm 65 dient der Nachkühlung der aus dem Vortrockner 41 austretenden Waschflüssigkeit. So kann eine weitere Temperaturabsenkung der Wasch flüssigkeit erreicht werden, oder aber es werden Temperaturschwankungen auf Grund unterschiedlicher Betriebsbedingungen des Vortrockners 41 ausgeglichen. Wenn für den Kühlturm 65 als Kühlmedium Außenluft verwendet wird, so läßt sich diese wie leicht ersichtlich entsprechend Fig. 1 dem ausströmenden Reingas beimischen und so zur Reduktion der Bildung von Dampffahnen verwenden.

In Fig. 4 ist dargestellt, daß bei einer Fig. 3 entsprechenden Anlage mit zwei Wäschern 1 und 57 der zweite Wäscher 57 auch mit einer Waschflüssigkeitskühlung und einer Wärmerückgewinnung betrieben werden kann, wie sie bereits anhand von Fig. 2 erläutert wurde. Dementsprechend sind in Fig. 4 dem zweiten Wäscher 57 eine Umwälzleitung 7 für die Waschflüssigkeit, ein Wärmetransportkreislauf 24 und ein Wärmepumpenkreislauf 50 wie anhand von Fig. 2 beschrieben zugeordnet. Auch hier gilt, daß allenfalls auf den getrennten Wärmetransportkreislauf 24 und damit auf die diesem zugeordnete Umwälzpumpe 25 und den Wärmetauscher 23 verzichtet werden kann, sofern die Waschflüssigkeit zur Nacherwärmung über den Wärmetauscher 56 über den Heizmantel 44 des Vortrockners 41 den Düsen 2 des Wäschers 57 zugeführt wird.

Eine solche zweistufige, allenfalls auch mehrstufige Anlage arbeitet besonders wirkungsvoll und mit hervorragender Reinigungsleistung. Allerdings ist der apparative Aufwand entsprechend groß. Die Entscheidung über die im Einzelfall zweckmäßige Anlage wird im wesentlichen anhand der Energiekosten, der bestehenden Anforderungen hinsichtlich der Emissionsgrenzwerte und den Möglichkeiten für die Ableitung anfallender Abwässer zu entscheiden sein.

Der Vollständigkeit halber sei darauf hingewiesen, daß zwischen den vorstehend beschriebenen Betriebsweisen auch verschiedenste Mischformen möglich sind, ebenso ein gleitender Betrieb zwischen diesen Betriebsweisen zur optimalen Anpassung an unterschiedliche Betriebsbedingungen.

## Patentansprüche

1. Verfahren zum Trocknen von zerkleinertem Holz, insbesondere von Holzspänen, Holzfasern oder Furnieren, bei dem das zu trocknende Holz erwärmt und Schadstoffe aus dem Trocknungsabgas ausgewaschen werden, das zumindest bis auf die Taupunkttemperatur des in ihm enthaltenen Wasserdampfs abgekühlt und über einen Kamin ins Freie abgegeben wird, **dadurch gekennzeichnet,** daß als Waschflüssigkeit ein Lösemittel verwendet wird, das einen höheren Siedepunkt und einen niedrigeren Dampfdruck als Wasser aufweist.

2. Verfahren nach Anspruch 1, dadurch **gekennzeichnet,** daß das Trocknungsabgas durch Kühlung der Waschflüssigkeit abgekühlt wird.

3. Verfahren nach Anspruch 1 oder 2, dadurch **gekennzeichnet,** daß durch Einsprühen von Wasser abgekühlt wird.

4. Verfahren nach einem der Ansprüche 1 bis 3, dadurch **gekennzeichnet,** daß das Trocknungsabgas indirekt durch Wärmetauscherflächen abgekühlt wird.

5. Verfahren nach einem der Ansprüche 1 bis 4, dadurch **gekennzeichnet,** daß die dem Trocknungsabgas durch seine Abkühlung entzogene Wärme einer Nutzung zugeführt wird.

6. Verfahren nach Anspruch 5, dadurch **gekennzeichnet,** daß mit der dem Trocknungsabgas entzogenen Wärme das zu trocknende Holz vorgetrocknet wird.

7. Verfahren nach Anspruch 6, dadurch **gekennzeichnet,** daß die der Vortrocknung nachfolgende Trocknung bei einer entsprechend der Vortrocknungsleistung herabgesetzten Temperatur erfolgt.

8. Verfahren nach Anspruch 6 oder 7, dadurch **gekennzeichnet,** daß die Vortrocknung unter gleichzeitiger Anwendung von Vakuum erfolgt.

9. Verfahren nach einem der Ansprüche 6 bis 8, dadurch **gekennzeichnet,** daß für die Vortrocknung genutzte Wärme über einen Wärmepumpenkreislauf zugeführt wird.

10. Verfahren nach einem der Ansprüche 1 bis 9, dadurch **gekennzeichnet,** daß als Waschflüssigkeit ein brennbares Lösemittel eingesetzt wird, das zusammen mit den ausgewaschenen Schadstoffen verbrannt wird, wobei vorzugsweise die Verbrennungswärme für die Trocknung oder Vortrocknung des Holzes genutzt wird und gegebenenfalls die Verbrennung gemeinsam mit einem Hauptbrennstoff zur Erhitzung des Wärmeträgers erfolgt.

11. Verfahren nach einem der Ansprüche 1 bis 10, dadurch **gekennzeichnet,** daß das gereinigte Trocknungsabgas vor seiner Abgabe über den Kamin erwärmt wird, vorzugsweise mit der dem Trocknungsabgas bei seiner vorangehenden Abkühlung entzogenen Wärme.

12. Verfahren nach einem der Ansprüche 1 bis 11, dadurch **gekennzeichnet,** daß das Trocknungsabgas durch wenigstens zwei hintereinander angeordnete Waschstufen geleitet wird, die mit verschiedenen Waschflüssigkeiten betrieben werden.

13. Verfahren nach einem der Ansprüche 1 bis 12, dadurch **gekennzeichnet,** daß mittels des Ausmaßes der Abkühlung des Trocknungsabgases der Anfall an Kondensat und damit die Abwassermenge in Anpassung an die jeweiligen Gegebenheiten gesteuert wird.

14. Vorrichtung zum Durchführen des Verfahrens nach Anspruch 1, bestehend aus einem Trockner (26) mit einer Einfülleinrichtung (27, 47) für das zu trocknende Holz, einer Einleitung (32) für ein Heizgas und einem Austritt (33), aus einem nachfolgenden Abscheider (34) zum Trennen des getrockneten Holzes vom Trocknungsabgas und aus einem vom Trocknungsabgas durchströmten Wäscher (1), dessen die Waschflüssigkeit auffangender Sumpf (3) über eine Umwälzleitung (7), die durch einen Wärmetauscher (23, 44) zur Kühlung der Waschflüssigkeit führt, mit den Sprühdüsen (2) des Wäschers (1) verbunden ist, wobei ein Ablauf (9) für schadstoffbeladene Waschflüssigkeit vorgesehen und dem Wäscher (1) eine Einrichtung (10, 11, 12) zum Zudosieren von Waschflüssigkeit zugeordnet ist, dadurch **gekennzeichnet,** daß der Wärmetauscher (23, 44) zur Kühlung der Waschflüssigkeit in einem Wärmetransportkreislauf (24, 63) zur Beheizung eines Vortrockners (41) für das zu trocknende Holz angeordnet ist.

15. Vorrichtung nach Anspruch 14, dadurch **gekennzeichnet,** daß der Wärmetransportkreislauf (24) durch einen vor dem Vortrockner (41) angeordneten Wärmetauscher (56) führt, der den Wärmeabgeber eines Wärmepumpenkreislaufs (50) bildet.

16. Vorrichtung nach Anspruch 15, dadurch **gekennzeichnet,** daß als Wärmeaufnehmer ein den Wärmepumpenkreislauf (50) mit dem Wärmetransportkreislauf (24) vor dem Wärmetauscher (23) der Umwälzleitung (7) verbindender Wärmetauscher (53) und/oder mit dem Ablauf (9) des Sumpfes (3) verbindender Wärmetauscher (54) und/oder mit der Dampfableitung (48) des Vortrockners (41) verbindender Wärmetauscher (55) vorgesehen ist/sind.

17. Vorrichtung nach Anspruch 14, dadurch **gekennzeichnet,** daß der Strömungsweg der Waschflüssigkeit vom Sumpf (13) zu den Sprühdüsen (2) direkt durch den Heizpfad (44) des Vortrockners (41) für das zu trocknende Holz führt, der den Wärmetauscher zur Kühlung der Waschflüssigkeit bildet.

18. Vorrichtung nach einem der Ansprüche 14 bis 17, **dadurch gekennzeichnet,** daß an die Dampfableitung (48) des Vortrockners (41) eine Vakuumpumpe (49) angeschlossen ist.

19. Vorrichtung zum Durchführen des Verfahrens nach Anspruch 1, bestehend aus einem Trockner (26) mit einer Einfülleinrichtung (27, 47) für das zu trocknende Holz, einer Einleitung (32) für ein Heizgas und einem Austritt (33), aus einem nachfolgenden Abscheider (34) zum Trennen des getrockneten Holzes vom Trocknungsabgas und aus einem vom Trocknungsabgas durchströmten Wäscher (1), dessen die Waschflüssigkeit auffangender Sumpf (3) über eine Umwälzleitung (7), die durch einen Wärmetauscher (23) zur Kühlung der Waschflüssigkeit führt, mit den Sprühdüsen (2) des Wäschers (1) verbunden ist, wobei ein Ablauf (9) für schadstoffbeladene Waschflüssigkeit vorgesehen und dem Wäscher (1) eine Einrichtung (10, 11, 12) zum Zudosieren von Waschflüssigkeit zugeordnet ist, **dadurch gekennzeichnet**, daß der Wärmetauscher (23) zur Kühlung der Waschflüssigkeit in einem Wärmetransportkreislauf (24) zur Nacherwärmung des zum Kamin (21) strömenden gewaschenen Trocknungsabgases angeordnet ist.

20. Vorrichtung nach einem der Ansprüche 14 bis 19, **dadurch gekennzeichnet**, daß wenigstens eine Düse (14) zum Einsprühen von Wasser in das zum Wäscher (1) strömende Trocknungsabgas vorgesehen ist.

21. Vorrichtung nach einem der Ansprüche 14 bis 20, **dadurch gekennzeichnet**, daß vor dem Wäscher (1) ein Wärmetauscher (13) zur Kühlung des ungewaschenen Trocknungsabgases angeordnet ist.

22. Vorrichtung nach einem der Ansprüche 14 bis 21, **dadurch gekennzeichnet**, daß dem Wäscher (1) ein Aerosolabscheider (16) nachgeordnet ist.

23. Vorrichtung nach einem der Ansprüche 14 bis 22, **dadurch gekennzeichnet**, daß der Ablauf (9) des Sumpfes (3) an einen Verbrennungsofen (28) angeschlossen ist.

24. Vorrichtung nach einem der Ansprüche 14 bis 23, **dadurch gekennzeichnet**, daß dem Wäscher (1) wenigstens ein weiterer Wäscher (57) mit eigener Umwälzleitung (7, 63), eigenem Wärmetauscher (23, 44) zur Waschflüssigkeitskühlung, eigenem Waschflüssigkeitsablauf (9) und eigener Einrichtung (61, 62) zum Zudosieren von Waschflüssigkeit nachgeordnet ist.

**Claims**

1. Process for drying fragmentized wood, especially wood chips, wood fibers or veneer, wherein the wood to be dried is heated and pollutants are washed out from the drying waste gas which is cooled down to at least the temperature of dew point of the vapour it contains and is discharged through a stack into the atmosphere,
   **characterized** in that a solvent is used as a washing liquid which has a higher boiling point and a lower vapour pressure than does water.

2. Process according to claim 1, **characterized** in that the drying waste gas is cooled down by cooling the washing liquid.

3. Process according to claim 1 or 2, **characterized** in that the cooling is effected by spraying in water.

4. Process according to any of claims 1 to 3, **characterized** in that the drying waste gas is cooled down indirectly by means of heat exchanger surfaces.

5. Process according to any of claims 1 to 4, **characterized** in that the heat withdrawn from the drying waste gas through its cooling down will be recovered.

6. Process according to claim 5, **characterized** in that the heat withdrawn from the drying waste gas is used for predrying the wood to be dried.

7. Process according to claim 6, **characterized** in that the drying operation following the predrying operation is carried out at a temperature reduced in keeping with the predrying efficiency.

8. Process according to claim 6 or 7, **characterized** in that the predrying is carried out under simultaneous vacuum.

9. Process according to any of claims 6 to 8, **characterized** in that the heat utilized in predrying is fed through a heat pump circuit.

10. Process according to any of claims 1 to 9, **characterized** in that a combustible solvent is used as a washing liquid, which is burnt together with the washed-out pollutants, wherein the combustion heat is preferably utilized in drying or predrying the wood and, if necessary, the combustion is carried out in common with a main combustible to heat the heat transfer medium.

11. Process according to any of claims 1 to 10, **characterized** in that prior to its discharge through the stack, the cleaned drying waste gas is heated, preferably, by means of the heat withdrawn from the drying waste gas during its preceding cooling.

12. Process according to any of claims 1 to 11, **characterized** in that the drying waste gas is directed through at least two series connected washing stages which are being run with different washing liquids.

13. Process according to any of claims 1 to 12, **characterized** in that, in order to take account of prevailing conditions, the condensate production and thus the volume of waste water is controlled by controlling the extent of cooling of the drying waste gas.

14. Apparatus for carrying out the process according to claim 1, consisting of a drier (26) with a loader means (27, 47) for the wood to be dried, an inlet (32) for a heating gas and an outlet (33), of a successive separating device (34) for separating the dried wood from the drying waste gas, and of a washing device (1), flown through by the drying waste gas, of which the washing liquid receiving sump (3) is connected with the spray nozzles (2) of the washing device (1) through a circulation pipe (7) passing through a heat exchanger (23, 44) for cooling the washing liquid, a discharge (9) for pollutant-carrying washing liquid being provided and means (10, 11, 12) for the metered admission of the washing liquid being associated with the washing device (1), **characterized** in that the heat exchanger (23, 44) designed to cool the washing liquid is mounted into a heat transport circuit (24, 63) intended to heat a predrier means (41) for the wood to be dried.

15. Apparatus according to claim 14, **characterized** in that the heat transport circuit (24) passes through a heat exchanger (56) disposed upstream of the predrier means (41), said heat exchanger forming the heat generator of a heat pump circuit (50).

16. Apparatus according to claim 15, **characterized** by the provision, as heat absorbing element(s), of a heat exchanger (53) which connects the heat pump circuit (50) with the heat transport circuit (24) at a point upstream of the heat exchanger (23) of the circulation pipe (7) and/or of a heat exchanger (54) which connects it with the discharge (9) of the sump (3) and/or of a heat exchanger (55) which connects it with the steam outlet (48) of the predrier means (41).

17. Apparatus according to claim 14, **characterized** in that the flow path of the washing liquid from the sump (3) to the spray nozzles (2) passes directly through the heating path (44) of the predrier means (41) for the wood to be dried, said latter forming the heat exchanger to cool the washing liquid.

18. Apparatus according to any of claims 14 to 17, **characterized** in that a vacuum pump (49) is connected to the steam outlet (48) of the predrier means (41).

19. Apparatus for carrying out the process according to claim 1, consisting of a drier (26) with a loader means (27, 47) for the wood to be dried, an inlet (32) for a heating gas and an outlet (33), of a successive separating device (34) for separating the dried wood from the drying waste gas, and of a washing device (1), flown through by the drying waste gas, of which the washing liquid receiving sump (3) is connected with the spray nozzles (2) of the washing device (1) through a circulation pipe (7) passing through a heat exchanger (23) for cooling the washing liquid, a discharge (9) for pollutant-carrying washing liquid being provided and means (10, 11, 12) for the metered admission of washing liquid being associated with the washing device (1), **characterized** in that the heat exchanger (23) for cooling the washing liquid is disposed in a heat transport circuit (24) designed to reheat the washed drying waste gas flowing towards the stack (21).

20. Apparatus according to any of claims 14 to 19, **characterized** in that at least one nozzle (14) is provided for spraying water into the drying waste gas flowing towards the washing device (1).

21. Apparatus according to any of claims 14 to 20, **characterized** in that a heat exchanger (13) intended for cooling the drying waste gas before washing is disposed upstream of the washing device (1).

22. Apparatus according to any of claims 14 to 21, **characterized** in that an aerosol separator (16) is disposed downstream of the washing device (1).

23. Apparatus according to any of claims 14 to 22, **characterized** in that the discharge (9) of sump (3) is connected to a combustion furnace (28).

24. Apparatus according to any of claims 14 to 23, **characterized** in that at least one further washing device (57) is disposed downstream of the washing device (1), said further washing device having a separate circulation pipe (7, 63), a separate heat exchanger (23, 44) for cooling the washing liquid, a separate discharge (9) for washing liquid, and separate means (61, 62) for the metered admission of washing liquid.

### Revendications

1. Procédé pour le séchage de fragments de bois, plus particulièrement de copeaux de bois, de fibres de bois ou de placages, procédé dans lequel le bois à sécher est chauffé et les polluants sont éliminés par lavage du gaz perdu de séchage qui est refroidi jusqu'à la température du point de rosée, au moins, de la vapeur d'eau qu'il contient et est évacué à l'atmosphère à travers une cheminée, **caractérisé** en ce que le liquide de lavage employé est un solvant qui a un point d'ébullition plus élevé et une pression de vapeur plus faible que l'eau.

2. Procédé selon la revendication 1, **caractérisé** en ce que le gaz perdu de séchage est refroidi par l'intermédiaire du refroidissement du liquide de lavage.

3. Procédé selon la revendication 1 ou 2, **caractérisé** en ce que l'on refroidit en projetant de l'eau dedans.

4. Procédé selon l'une quelconque des revendications 1 à 3, **caractérisé** en ce que le gaz perdu de séchage est refroidi indirectement par l'intermédiaire de surfaces d'échangeur de chaleur.

5. Procédé selon l'une quelconque des revendications 1 à 4, **caractérisé** en ce que l'on récupère la chaleur extraite du gaz perdu de séchage en le refroidissant.

6. Procédé selon la revendication 5, **caractérisé** en ce que la chaleur extraite du gaz perdu de séchage est utilisé pour présécher le bois à sécher.

7. Procédé selon la revendication 6, **caractérisé** en ce que le séchage qui suit le préséchage est effectué à une température réduite en correspondance avec le rendement du préséchage.

8. Procédé selon la revendication 6 ou 7, **caractérisé** en ce que le préséchage est effectué sous un vide simultané.

9. Procédé selon l'une quelconque des revendications 6 à 8, **caractérisé** en ce que la chaleur utilisée dans le préséchage est amenée au moyen d'un circuit de pompe à chaleur.

10. Procédé selon l'une quelconque des revendications 1 à 9, **caractérisé** en ce que le liquide de lavage employé est un solvant combustible qui est brûlé ensemble avec les polluants séparés par lavage, cas dans lequel, de préférence, la chaleur de combustion est utilisée pour le séchage ou le préséchage du bois et la combustion est réalisée en commun avec un combustible principal destiné au chauffage du caloporteur.

11. Procédé selon l'une quelconque des revendications 1 à 10, **caractérisé** en ce que le gaz perdu de séchage nettoyé est chauffé avant son évacuation à travers la cheminée, de préférence en utilisant la chaleur extraite du gaz perdu de séchage au cours de son refroidissement précédent.

12. Procédé selon l'une quelconque des revendications 1 à 11, **caractérisé** en ce que le gaz perdu de séchage est dirigé pour passer au moins deux étages de lavage, disposés en série, qui sont opérés avec des liquides de lavage différents.

13. Procédé selon l'une quelconque des revendications 1 à 12, **caractérisé** en ce que, pour tenir compte des circonstances du cas, on contrôle la production de condensats et, par là, la quantité des eaux usées en faisant varier le degré de refroidissement du gaz perdu de séchage.

14. Dispositif pour la mise en oeuvre du procédé selon la revendication 1, dispositif consistant en un sécheur (26) avec des moyens de chargement (27, 47) du bois à sécher, une entrée (32) pour un gaz de chauffage et une sortie (33), en un séparateur (34), disposé en aval, pour la séparation du bois séché du gaz perdu de séchage, et en un laveur (1), parcouru par le gaz perdu de séchage, dont le puisard (3) collecteur du liquide de lavage est connecté avec les buses (2) du laveur (1) à travers une conduite de circulation (7) passant par un échangeur de chaleur (23, 44), destiné au refroidissement du liquide de lavage, une conduite d'évacuation (9) pour le liquide de lavage chargé de polluants étant prévue, et le laveur (1) étant associé avec des moyens (10, 11, 12) pour l'introduction dosée du liquide de lavage, **caractérisé** en ce que l'échangeur de chaleur (23, 44), destiné à refroidir le liquide de lavage, est disposé dans un circuit de transport de chaleur (24, 63), servant à chauffer un présécheur (41) pour le bois à sécher.

15. Dispositif selon la revendication 14, **caractérisé** en ce que le circuit de transport de chaleur (24) passe par un échangeur de chaleur (56), disposé en amont du présécheur (41), cet échangeur de chaleur formant le producteur de chaleur d'un circuit de pompe à chaleur (50).

16. Dispositif selon la revendication 15, **caractérisé** en ce que l'on a prévu comme élément(s) absorbant la chaleur un échangeur de chaleur (53) connectant le circuit de pompe à chaleur (50) avec le circuit de transport de chaleur (24) en amont de l'échangeur de chaleur (23) de la conduite de circulation (7) et/ou un échangeur de chaleur (54) le connectant avec la conduite d'évacuation (9) du puisard (3) et/ou un échangeur de chaleur le connectant avec la sortie de vapeur d'eau (48) du présécheur (41).

17. Dispositif selon la revendication 14, **caractérisé** en ce que la voie d'écoulement du liquide de lavage entre le puisard (3) et les buses (2) passe directement à travers la voie de chauffage (44) du présécheur (41) pour le bois à sécher, ce dernier formant l'échangeur de chaleur pour le refroidissement du liquide de lavage.

18. Dispositif selon l'une quelconque des revendications 14 à 17, **caractérisé** en ce qu'une pompe à vide (49) est raccordée à la sortie de vapeur d'eau (48) du présécheur (41).

19. Dispositif pour la mise en oeuvre du procédé selon la revendication 1, dispositif consistant en un sécheur (26) avec des moyens de chargement (27, 47) du bois à sécher, une entrée (32) pour un gaz de chauffage et une sortie (33), en un séparateur (34), disposé en aval, pour la séparation du bois séché du gaz perdu de séchage, et en un laveur (1), parcouru par le gaz perdu de séchage, dont le puisard (3) collecteur du liquide de lavage est connecté aux buses (2) du laveur (1) par une conduite de circulation (7) passant par un échangeur de chaleur (23), destiné au refroidissement du liquide de lavage, une conduite d'évacuation (9) pour le liquide de lavage chargé de polluants étant prévue, et le laveur (1) étant associé avec des moyens (10, 11, 12) pour l'introduction dosée du liquide de lavage, **caractérisé** en ce que l'échangeur de chaleur (23) destiné au refroidissement du liquide de lavage est disposé dans un circuit de transport de chaleur (24) servant à réchauffer le gaz perdu de séchage lavé passant vers la cheminée (21).

20. Dispositif selon l'une quelconque des revendications 14 à 19, **caractérisé** en ce que l'on a prévu au moins une buse (14) destinée à projeter de l'eau dans le gaz perdu de séchage passant vers le laveur (1).

21. Dispositif selon l'une quelconque des revendications 14 à 20, **caractérisé** en ce que l'on a disposé, en amont du laveur (1), un échangeur de chaleur (13) destiné à refroidir le gaz perdu de séchage avant lavage.

22. Dispositif selon l'une quelconque des revendications 14 à 21, **caractérisé** en ce que l'on a disposé un séparateur d'aérosol (16) en aval du laveur (1).

23. Dispositif selon l'une quelconque des revendications 14 à 22, **caractérisé** en ce que la conduite d'évacuation (9) du puisard (3) est raccordée à un four à combustion (28).

24. Dispositif selon l'une quelconque des revendications 14 à 23, **caractérisé** en ce que l'on a disposé en aval du laveur (1) au moins un autre laveur (57) avec une conduite de circulation séparée (7, 63), un échangeur de chaleur séparé (23, 44), destiné au refroidissement du liquide de lavage, une conduite d'évacuation séparée (9) pour le liquide de lavage, et des moyens séparés (61, 62) servant à l'introduction dosée du liquide de lavage.

Fig. 1

Fig. 2

Fig. 3

Fig. 4